## Europäisches Patentamt

## European Patent Office

## Office européen des brevets

(11) Veröffentlichungsnummer: **0 003 031**
**A1**

(12) # EUROPÄISCHE PATENTANMELDUNG

(21) Anmeldenummer: 78101667.0

(22) Anmeldetag: 13.12.78

(51) Int. Cl.²: **H 02 G 5/06**

(30) Priorität: 12.01.78 DE 2801505

(43) Veröffentlichungstag der Anmeldung:
25.07.79 Patentblatt 79/15

(84) Benannte Vertragsstaaten:
BE CH DE FR GB LU NL SE

(71) Anmelder: SIEMENS AKTIENGESELLSCHAFT Berlin
und München
Postfach 261
D-8000 München 22(DE)

(72) Erfinder: Diessner, Armin
Cicerostrasse 60
D-1000 Berlin 31(DE)

(54) Druckgasisolierte Hochspannungsleitung.

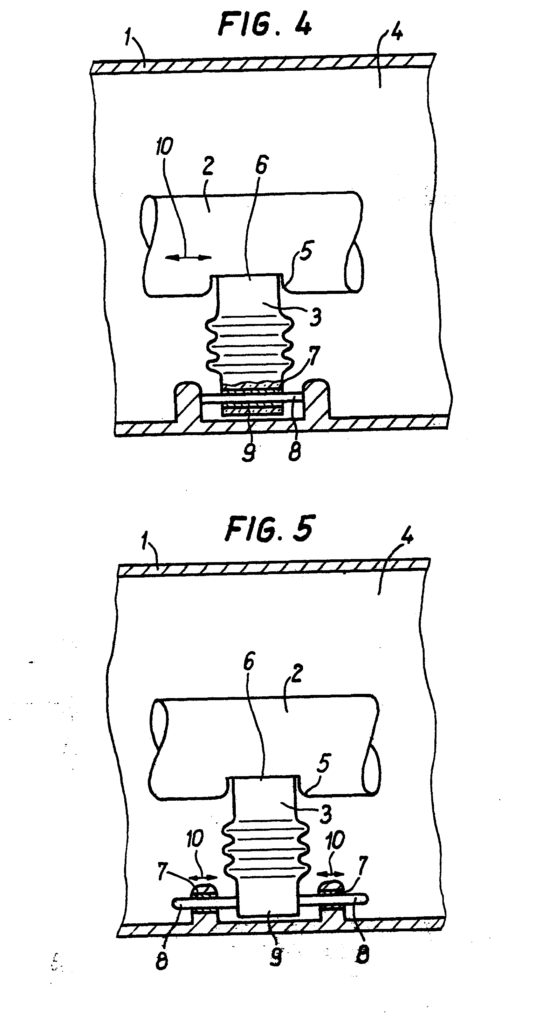

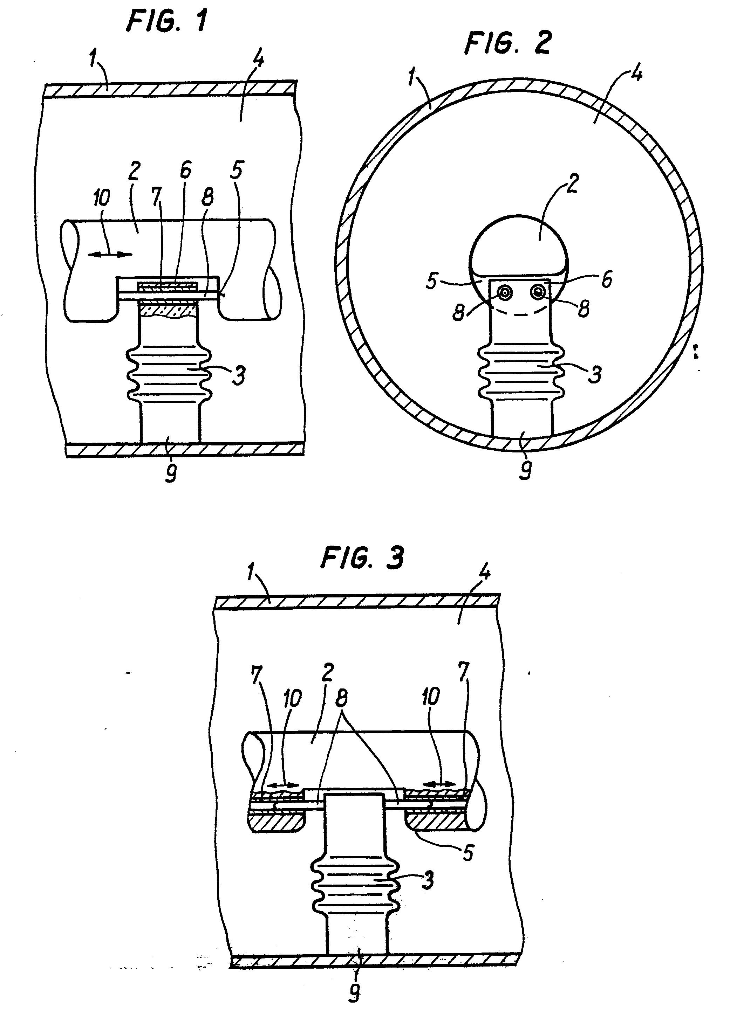

(57) Die Erfindung bezieht sich auf eine druckgasisolierte Hochspannungsleitung, die eine Metallkapselung (1) aufweist und mittels Stützisolatoren (3) die Hochspannung führenden Leiter (2) trägt. Zur Erzielung einer Verschiebbarkeit des Leiters (2) gegenüber der Kapselung (1) in axialer Richtung sind gemäß der Erfindung mindestens zwei parallele Gleitführungsbolzen (8) vorgesehen, die axial zum Hochspannungsleiter (2) und zur Kapselung (1) verlaufen. Sie sind zum einen mit einem Ende (6) des Stützisolators (3) verbunden und zum anderen am Hochspannungsleiter (2) gehalten. Mit der Längsverschiebbarkeit werden unterschiedliche Längenänderungen des Hochspannungsleiters (2) gegenüber der Kapselung (1) bei thermischer Belastung der Hochspannungsleitung (2) ausgeglichen. Druckgasisolierte Hochspannungsleitungen dieser Art werden in Energieversorgungsnetzen mit Spannungen zwischen 110 and 765 kV eingesetzt. (Fig. 1)

*FIG. 1*

0003031

SIEMENS AKTIENGESELLSCHAFT          Unser Zeichen
Berlin und München                  VPA 78 P 3702 BRD

<u>Druckgasisolierte Hochspannungsleitung</u>

Die Erfindung bezieht sich auf eine druckgasisolierte
Hochspannungsleitung mit einer Metallkapselung und mittels Stützisolatoren getragener, die Hochspannung führender Leiter, die gegenüber der Kapselung in axialer
Richtung verschiebbar sind.

Aus der DE-OS 23 47 003 ist eine gekapselte Rohrleitung
bekannt, bei der die Hochspannung führenden Leiter im
Innern einer rohrförmigen metallischen Kapselung mittels
Stützisolatoren abgestützt sind. Bei der bekannten Ausführungsform ist zwischen dem Hochspannungsleiter und
der Steuerelektrode des Stützisolators eine Gleitlagerung vorgesehen, die einerseits den Ausgleich von Toleranzen bewirkt als auch unterschiedliche Längenänderungen des Hochspannungsleiters und der Kapselung ausgleichen kann.

Aus der DE-PS 20 48 989 ist eine druckgasisolierte
Hochspannungsleitung bekannt, bei dem die Isolatoren mit

He 3 Un / 9.1.1978

einer äußeren Metallfassung verbunden sind, die ihrerseits mittels Rollen gegenüber der Kapselung verschiebbar ist. Bei dieser bekannten Anordnung werden unterschiedliche Längenänderungen der stromführenden Teile der druckgasisolierten Hochspannungsleitung bei thermischer Belastung ausgeglichen.

Die Erfindung beschäftigt sich mit einer anderen Lösung des Problems, eine Längsverschiebbarkeit des Hochspannungsleiters gegenüber der Kapselung einer druckgasisolierten Hochspannungsleitung zu erzielen.

Erfindungsgemäß sind mindestens zwei parallele, axial zum Hochspannungsleiter und zur Kapselung verlaufende Gleitführungsbolzen vorgesehen, die zum einen mit einem Ende des Stützisolators verbunden und zum anderen am Hochspannungsleiter oder an der Kapselung gehaltert sind.

Durch Anwendung der Erfindung ergibt sich eine axiale Verschiebbarkeit des Hochspannungsleiters mittels einer in axialer Richtung starren Führung, so daß Stromkräfte zu keiner Ausweichbewegung des Leiters führen. Die Erfindung schafft die Voraussetzung für den Einsatz von zylindrischen Stützisolatoren anstelle der scheibenförmigen bzw. hohlkegelförmigen Stützisolatoren bei den bekannten Hochspannungsleitungen.

Zwar ist aus der DE-OS 23 30 282 eine gekapselte, gasisolierte Hochspannungsleitung mit zylindrischen Stützisolatoren für den Hochspannungsleiter bekannt, die mittels Rollen gegenüber der Kapselung verschiebbar angeordnet sind, jedoch wirkt die Anordnung zur Verschiebung nicht direkt zwischen der Kapselung, dem Stützisolator und dem Hochspannungsleiter, sondern zwischen Schienen und einem Rollen aufweisenden Träger für die Stützisolatoren.

Bei einer besonders vorteilhaften Ausführungsform sind die Gleitführungsbolzen am Stützisolator starr befestigt. Damit ist es möglich, die Gleitführungsbolzen im Stützisolator mit einzugießen.

Bei einer etwas anderen Ausführungsform sind die Gleitführungsbolzen am Stützisolator gleitbeweglich geführt. In allen Fällen kann die bewegliche Führung der Gleitführungsbolzen in Gleitlagern erfolgen, die aus einem Material mit geringem Reibungskoeffizienten bestehen. Als Gleitmaterial kann Polytetrafluoräthylen verwendet sein, dessen Leitfähigkeit durch einen elektrisch leitenden Zusatzstoff, z. B. Graphit, erhöht wird. Dadurch ist das Gleitlager elektrisch leitend überbrückt. Es ist auch möglich, für die elektrisch leitende Überbrückung ein flexibles Stromband vorzusehen.

Anhand der Zeichnung sind Ausführungsbeispiele der druckgasisolierten Hochspannungsleitung beschrieben.

Die Figur 1 zeigt schematisch einen Querschnitt durch eine druckgasisolierte Hochspannungsleitung.

In Fig. 2 ist die zugehörige Seitenansicht schematisch dargestellt.

Fig. 3 zeigt schematisch eine der Figur 1 entsprechende Ausführungsform.

In Fig. 4 ist eine weitere Ausführungsform in einer der Figur 1 entsprechenden Darstellung gezeichnet.

Fig. 5 enthält eine weitere schematische Darstellung einer druckgasisolierten Hochspannungsleitung nach der Erfindung.

Die in der Figur 1 dargestellte druckgasisolierte Hochspannungsleitung weist eine Metallkapselung 1 auf und einen Hochspannung führenden Leiter 2, der mittels Stützisolatoren 3 getragen ist. Im Innern 4 der Kapselung 1 ist ein gasförmiges Isoliermittel, z. B. Schwefelhexafluorid, unter einem Druck von etwa 3 bar eingefüllt. Der Hochspannung führende Leiter 2 enthält an der Befestigungsstelle des Stützisolators eine Einziehung 5, in die ein Ende 6 des Stützisolators 3 eintaucht. Das Ende 6 des Stützisolators 3 ist mit einem Gleitlager 7 versehen, das mit einem Gleitführungsbolzen 8 zusammenwirkt. Der Gleitführungsbolzen 8 ist je Befestigungsstelle paarweise vorhanden.

Wie die Figur 2 zeigt, sind die Gleitführungsbolzen 8 parallel angeordnet. Sie haben eine axial zum Hochspannungsleiter 2 und zur Kapselung 1 verlaufende Achse. Das andere Ende 9 des Stützisolators 3 ist mit der Kapselung 1 starr verbunden. Bei thermischer Belastung kann der Hochspannungsleiter 2 in Pfeilrichtung 10 gegenüber der Kapselung 1 bewegt werden.

Bei dem in Fig. 3 dargestellten Ausführungsbeispiel, bei dem gleiche Teile wie in Fig. 1 mit gleichen Bezugszeichen versehen sind, sind die Gleitführungsbolzen 8 starr am Stützisolator 3 befestigt. Die Gleitführungsbolzen 8 greifen in Gleitlager 7 ein, die starr im Leiter 2 angeordnet sind. Auf diese Weise ergibt sich ebenfalls eine in Pfeilrichtung 10 gleitbewegliche Führung des Hochspannungsleiters 2 gegenüber der Kapselung 1.

Das Ausführungsbeispiel nach Fig. 4 enthält ein Paar an der Kapselung 1 starr befestigter Gleitführungsbolzen 8, die mit je einer starr im Stützisolator 3 verankerten Buchse 7 als Gleitlager zusammenwirken. Der Stützisolator 3 ist mit seinem einen Ende 6 starr in der Einziehung 5 des Hochspannungsleiters 2 verankert.

0003031

Die Figur 5 zeigt mit der Kapselung 1 verbundene Gleitlager 7, die im Ende 9 des Stützisolators 3 starr verankerte Gleitführungsbolzen 8 aufnehmen. Im übrigen ergibt sich die gleiche Wirkungsweise wie bei der Anordnung nach Fig. 4.

In allen Fällen sind Gleitführungsbolzen 8 parallel angeordnet und in Gleitlagern 7 geführt, die aus einem Material mit geringem Reibungskoeffizienten bestehen. Als Gleitlagermaterial ist Polytetrafluoräthylen vorzuziehen, das einen elektrisch leitenden Zusatzstoff, z. B. Graphit, enthält. Dies soll die Leitfähigkeit erhöhen, damit die Potentialübertragung auf die Anordnung zur Längenverschiebung des Leiters 2 sichergestellt ist.

Es ist jedoch auch möglich, die elektrisch leitende Überbrückung der Lageranordnung durch ein flexibles Stromband zu bewirken.

8 Ansprüche
5 Figuren

0003031
VPA 78 P 3702 BRD

<u>Patentansprüche</u>

1. Druckgasisolierte Hochspannungsleitung mit einer Metallkapselung und mittels Stützisolatoren getragener, die Hochspannung führender Leiter, die gegenüber der Kapselung in axialer Richtung verschiebbar sind, g e k e n n z e i c h n e t durch mindestens zwei parallele, axial zum Hochspannungsleiter (2) und zur Kapselung (1) verlaufende Gleitführungsbolzen (8), die zum einen mit einem Ende (6) des Stützisolators (3) verbunden und zum anderen am Hochspannungsleiter (2) oder an der Kapselung (1) gehaltert sind.

2. Hochspannungsleitung nach Anspruch 1, d a d u r c h g e k e n n z e i c h n e t , daß die Gleitführungsbolzen (8) am Stützisolator (3) starr befestigt sind.

3. Hochspannungsleitung nach Anspruch 1, d a d u r c h g e k e n n z e i c h n e t , daß die Gleitführungsbolzen (8) am Stützisolator (3) gleitbeweglich geführt sind.

4. Hochspannungsleitung nach einem der Ansprüche 1 bis 3, d a d u r c h g e k e n n z e i c h n e t , daß die Gleitführungsbolzen (8) in Gleitlagern (7) beweglich geführt sind, die aus einem Material mit geringem Reibungskoeffizienten bestehen.

5. Hochspannungsleitung nach Anspruch 4, d a d u r c h g e k e n n z e i c h n e t , daß als Gleitlagermaterial Polytetrafluoräthylen verwendet ist.

6. Hochspannungsleitung nach Anspruch 4, d a d u r c h g e k e n n z e i c h n e t , daß die Gleitlager (7) elektrisch leitend überbrückt sind.

0003031

7. Hochspannungsleitung nach Anspruch 6, d a d u r c h g e k e n n z e i c h n e t , daß die eletrisch leitende Überbrückung ein flexibles Stromband enthält.

8. Hochspannungsleitung nach Anspruch 6, d a d u r c h g e k e n n z e i c h n e t , daß das Polytetrafluoräthylen einen elektrisch leitenden Zusatzstoff enthält, der die Leitfähigkeit des Gleitlagermaterials erhöht.

## FIG. 4

## FIG. 5

FIG. 1

FIG. 2

FIG. 3

| | | 0003031 |
|---|---|---|
| | **EUROPÄISCHER RECHERCHENBERICHT** | Nummer der Anmeldung |
| Europäisches Patentamt | | EP 78 10 1667 |

## EINSCHLÄGIGE DOKUMENTE

| | KLASSIFIKATION DER ANMELDUNG (Int.Cl.²) |
|---|---|

| Kategorie | Kennzeichnung des Dokuments mit Angabe, soweit erforderlich, der maßgeblichen Teile | betrifft Anspruch |
|---|---|---|
| A | <u>DE - A - 2 339 554</u> (SIEMENS) <br> * Anspruch 1 * <br><br> -- | 1 |
| A | <u>FR - A - 2 252 636</u> (BBC) <br> * Anspruch 1 * <br><br> ---- | 1 |

**KLASSIFIKATION DER ANMELDUNG (Int.Cl.²)**

H 02 G 5/06

**RECHERCHIERTE SACHGEBIETE (Int. Cl.²)**

H 02 G  5/06
H 01 B  9/06
        7/02
        17/18
        17/16
        17/22

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 23-03-1979 | DAILLOUX |

EPA form 1503.1  06.78